# EUROPEAN PATENT APPLICATION

(11) **EP 1 270 333 A2**
(43) Date of publication of application: **02.01.2003**
(21) Application number: 02254351.6
(22) Date of filing: 21.06.2002
(51) Int. Cl.: B60R 1/072

(54) **External rear-view mirror**

(30) Priority: 21.06.2001 US 886866
(71) Applicant: METAGAL INDUSTRIA E COMERCIO LTDA., Estado de Sao Paulo CEP:09990-090 (BR)
(72) Inventor: Miyabukuro, Pedro Takashi, Santo Andre, Est.de Sao Paulo 09090-520 (BR)
(74) Representative: Johnstone, Douglas Ian

(57) **Abstract**

An external rear-view mirror of an automotive vehicle has a mirror plate assembly (1) including a mirror plate (2) and a rear cover (3), a moving mechanism for the mirror plate assembly (1) including a bearing/electric motor assembly (4), a housing (5) in which the mirror plate assembly and the bearing/motor assembly are accommodated, a base (6) with which the housing is connected in an articulated manner, the base being fixable to a side of a vehicle. The mirror plate assembly and the bearing/motor assembly are directly fixed to one another by fixing means. The fixing may be by means of a weld seam, by glue, by screws and holes or pegs and receiving holes.

## Description

The present invention relates to external rear-view mirrors.

An external rear-view mirror usually includes a mirror plate set or assembly composed of a mirror plate and a cover in which the mirror plate is fixed, a motion mechanism with a part connected with the mirror plate set, including a bearing in a manual mirror or an electric motor in an electric mirror, a housing in which the plate and the bearing/motor set, or assembly, is assembled, and a base which articulately supports the housing and is fixed to the vehicle.

In known rear-view mirrors, the mirror plate set is connected with the bearing/motor set through an adaptor. The adaptor is formed as a plate which is located between the cover of the mirror plate set and the bearing/motor of the bearing/motor set and has parts of a mechanical connection device connected correspondingly to the cover and to the bearing/motor. It is desirable to simplify the construction and to decrease the cost of such external rear-view mirrors.

Accordingly, it is an object of the present invention to provide an external rear-view mirror which is a further improvement of the existing rear-view mirrors.

More particularly, it is an object of the present invention to provide an external rear-view mirror which is simpler than existing devices and provides a direct connection of the mirror set to the bearing/motor without the use of an adaptor.

In keeping with these objects and with others which will become apparent hereinafter, one feature of the present invention resides in an external rear-view mirror. The rear-view mirror has a mirror plate set which comprises a mirror plate and a rear cover. There is a moving mechanism for said mirror plate set which includes a bearing/electric motor set and a housing in which both are accommodated. The housing is connected to a base which is fixable to a side of a vehicle. The mirror plate set and said bearing/motor set are directly fixed to one another by use of insertion and reception elements on both parts.

When the external rear-view mirror is designed in accordance with the present invention, it is a further improvement of the existing external rear-view mirrors, it has a simpler construction, reduced numbers of parts, and therefore costs less to produce.

The novel features which are considered as characteristic for the present invention are set forth in the appended claims. The invention itself, however, both as to its construction and its method of operation, together with additional objects and advantages thereof, will be best understood from the following description of specific embodiments when read in connection with the accompanying drawing.

The invention will now be described by way of example only with reference to the accompanying figure.

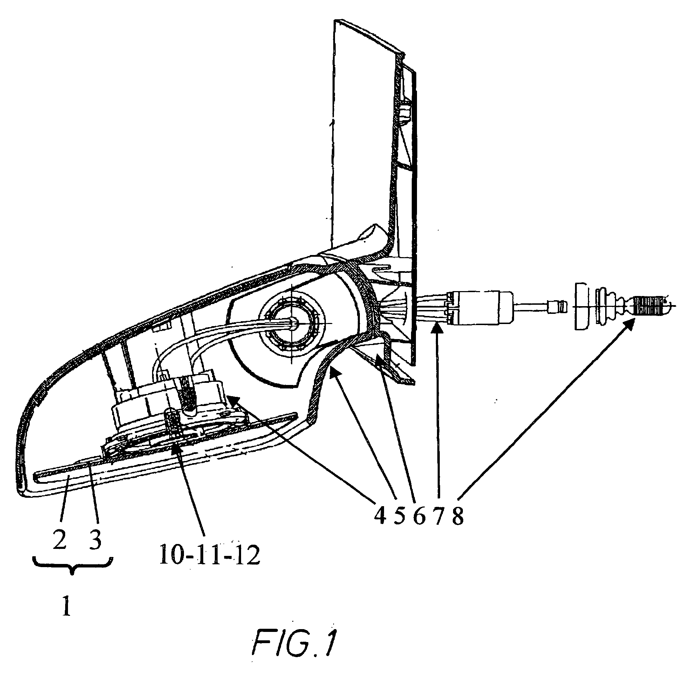

The single figure of the drawings (Figure 1) is a schematic view of an external rear-view mirror in accordance with the present invention.

An external rear-view mirror, in accordance with the present invention, has a mirror plate set which is identified as a whole with reference numeral 1. A mirror pate set has a mirror plate 2 and a cover 3 in or to which the plate is fixed.

The external rear-view mirror further has a motion mechanism for the mirror plate set 1. When the external rear-view mirror is operated manually, a bearing set is included in the motion mechanism 4 to which the mirror plate set 1 is connected. An electric motor set is included in the motion mechanism 4 connected to the mirror plate set 1 when the external rear-view mirror is formed as an electric rear-view mirror.

The external rear-view mirror further has a housing which is identified with reference numeral 5. The mirror plate set 1 and the bearing/motor set 4 are assembled and accommodated in the housing 5. Finally, the external rear-view mirror has a base 6 in or to which the housing 5 is fixed in an articulated way. The base 6 is fixed to a side of a vehicle.

In accordance with the present invention, the mirror plate set 1 and the bearing/motor set 4 are fixed directly to one another. For this purpose, corresponding connecting parts 10 and 11 are associated with the mirror plate set 1 and in the bearing/motor set 4 respectively. A third element 12 can be provided for making a connection between the parts 10 and 11.

In accordance with the present invention, the parts 10, 11 and 12 can be formed in the following manner. The part 10 can be formed as holes 10 provided directly in the cover 3 of the mirror plate set 1. The parts 11 can be formed by corresponding holes 11 provided directly in the bearing/motor set 4. Finally, the part 12 can be formed as screws which are inserted in the holes 10 and 11, when they are aligned with one another, to provide a direct mechanical connection between the parts 10 and 11, and therefore between the sets 1 and 4.

The external rear-view mirror can of course have other components such as an electric motor supply circuit with an actuation button inside the vehicle compartment or movement transmission cables extending between the bearing and an internal lever of the vehicle. Also, it may have a mirror safety mechanism which reduces the chance of the mirror being damaged when subject to impacts, and also other known components.

In accordance with a non-illustrated embodiment of the present invention, the mirror plate set 1 and the bearing/motor set 4 can be connected with one another by insertion into each other. In this case, one or more insertion parts are provided on the cover 3 of the mirror plate set 1, and one or more corresponding receiving parts are provided on the bearing/motor set 4 or vice versa. The insertion and reception parts can be coupled with one another, providing direct coupling between the cover and the bearing/motor.

In another non-illustrated embodiment, the connection between the mirror cover 3 and the bearing/motor set 4 can be provided by corresponding surfaces of the cover and of the bearing/motor set which are connected to one another by gluing or by welding.

It is to be understood that the connection of the mirror plate set 1 to the bearing/motor set 4 can be by screws, by insertion, or by gluing or welding. The dimension, quantity and other features of the housing, screws, insertion and reception parts, or the surfaces to be glued or welded are governed by the mirror cover 3 and the bearing/motor set 4 to which it is joined.

It will be understood that each of the elements described above, or two or more together, may also find a useful application in other types of construction differing from the types described above.

While the invention has been illustrated and described as embodied in an external rear-view mirror, it is not intended to be limited to the details shown, since various modifications and structural changes may be made without departing in any way from the present invention.

Without further analysis, the foregoing fully reveals the gist of the present invention so that others can, by applying current knowledge, readily adapt it for various applications without omitting features that, from the standpoint of prior art, fairly constitute essential characteristics of the generic or specific aspects of the invention.

## Claims

1. An external rear-view mirror for an automotive vehicle, comprising a mirror plate set (1) including a mirror plate (2) and a rear cover (3); a moving mechanism for said mirror plate set (1) including a bearing/electric motor set (4); a housing (5) in which said mirror plate set (1) and said bearing/motor set (4) are accommodated; a base (6) with which said housing (5) is connected in an articulated manner, said base (6) being fixable to a side of a vehicle, wherein said mirror plate set (1) and said bearing/motor set (4) are directly fixed with one another by the use of parts including one fixing part (10) associated with said mirror plate set (1) and another fixing part (11) associated with said bearing/motor set (4) and connectable with said one fixing part.

2. An external rear-view mirror as defined in claim 1, further comprising an additional element (12) which connects said one fixing part (10) of said mirror plate set (1) with said other fixing part (11) of said bearing/motor set (4).

3. An external rear-view mirror as defined in claim 1, wherein said one fixing part (10) of said mirror plate set (1) is formed as a hole provided in said cover (3) of said mirror plate set (1), said other fixing part (11) is formed as a hole provided in said bearing/motor set (4).

4. An external rear-view mirror as defined in claim 3, wherein said holes are aligned with each other, the mirror further comprising screw means extending through said aligned holes and directly connecting said mirror plate set (1) with said bearing/motor set (4).

5. An external rear-view mirror according to any preceding claim further comprising plural fixing parts associated with the mirror plate set (1).

6. An external rear-view mirror according to any preceding claim further comprising plural fixing parts associated with the bearing/motor set (4).

7. An external rear-view mirror as defined in claim 1, wherein said cover (3) of said mirror plate set (1) is provided with said one fixing part (10) which is formed as an insertion or reception part, said bearing/motor set (4) being provided with said other fixing part (11) which is formed as a corresponding reception or insertion part so that said insertion and reception parts are coupled with one another.

8. An external rear-view mirror as defined in claim 1, wherein said cover of said mirror plate set (1) has a first surface forming said one fixing part, said bearing/motor set (4) having a second surface which is formed as said other fixing part, said surfaces being connected to one another by a glue layer.

9. An external rear-view mirror as defined in claim 1, wherein said cover (3) of said mirror plate set (1) has a first surface forming said one fixing part, said bearing/motor set (4) having a second surface which is formed as said other fixing part, said surfaces being connected with one another by a welding seam.
